(19) Europäisches Patentamt
European Patent Office
Office européen des brevets

(11) **EP 0 826 194 B1**

(12) **EUROPEAN PATENT SPECIFICATION**

(45) Date of publication and mention
of the grant of the patent:
**31.03.1999 Bulletin 1999/13**

(21) Application number: **96906272.8**

(22) Date of filing: **29.01.1996**

(51) Int Cl.$^6$: **G06T 3/60**

(86) International application number:
**PCT/US96/01418**

(87) International publication number:
**WO 96/36941 (21.11.1996 Gazette 1996/51)**

(54) **IMAGE SKEWING AND ROTATION USING DISCRETE COSINE TRANSFORMS**

BILDSCHRAEGUNG UND BILDDREHUNG MIT ANWENDUNG DER DISKRETEN COSINUSFORMATION

INCLINAISON ET ROTATION D'IMAGE PAR TRANSFORMEES EN COSINUS DISCRETS

(84) Designated Contracting States:
**DE FR GB**

(30) Priority: **15.05.1995 US 440666**

(43) Date of publication of application:
**04.03.1998 Bulletin 1998/10**

(73) Proprietor: **POLAROID CORPORATION
Cambridge, Massachusetts 02139-3589 (US)**

(72) Inventors:
• WOBER, Munib, A.
  Haverhill, MA 01832 (US)
• HAJJAHMAD, Ibrahim
  Sommerville, MA 02145 (US)
• REISCH, Michael, L.
  Carlisle, MA 01741 (US)
• SUNSHINE, Lon, E.
  Boston, MA 02114 (US)

(74) Representative: **Patentanwälte
Dipl.-Ing. R. Splanemann Dr. B. Reitzner
Dipl.-Ing. K. Baronetzky
Tal 13
80331 München (DE)**

(56) References cited:
**EP-A- 0 433 645      WO-A-95/29461**

• **CVGIP: GRAPHICAL MODELS AND IMAGE PROCESSING, JULY 1992, USA, vol. 54, no. 4, ISSN 1049-9652, pages 340-344, XP000288359 DANIELSSON P E ET AL: "High-accuracy rotation of images"**
• **PROCEEDINGS CVPR '86: IEEE COMPUTER SOCIETY CONFERENCE ON COMPUTER VISION AND PATTERN RECOGNITION (CAT. NO.86CH2290-5), MIAMI BEACH, FL, USA, 22-26 JUNE 1986, ISBN 0-8186-0721-1, 1986, WASHINGTON, DC, USA, IEEE COMPUT. SOC. PRESS, USA, pages 272-277, XP000572260 TANAKA A ET AL: "A rotation method for raster image using skew transformation"**
• **PROCEEDINGS OF GRAPHICS INTERFACE '86 AND VISION INTERFACE '86, VANCOUVER, BC, CANADA, 26-30 MAY 1986, 1986, TORONTO, ONT., CANADA, CANADIAN INF. PROCESS. SOC, CANADA, pages 77-81, XP000572832 PAETH A W: "A fast algorithm for general raster rotation"**

## Description

BACKGROUND OF THE INVENTION

The invention relates generally to an improved image processing system and methods for use with this system. More particularly, the invention relates to a system and methods thereto for producing a sheared or rotated image.

Images can be thought of as two-dimensional representations of some visual reality that is distributed in space and/or time. Ordinarily, images are what the human visual system perceives as variations in external stimuli such as brightness, color, and sometimes depth cues. While over the years many techniques have been developed to capture and reproduce images, their representation as continuous, discrete, or digital signals which can be manipulated, processed or displayed through the use of computers or other special purpose electronic hardware is the most recent technique. Now well-established, this latest technique has a variety of beneficial applications. For instance, while in electronic form, images can be enhanced to create special visual effects, restored, coded for transmission to distant locations, stored in memory (such as on CDROM, DAT, floppy disks, etc.), reconstructed, displayed, or converted to some other tangible form.

Image processing can occur in various domains such as the spatial domain or the frequency domain. An image is said to reside in the spatial domain when the values of the parameters used to describe it, such as luminance, have a direct correspondence with spatial location. In the frequency domain, the image of the spatial domain may be represented by a series of frequency components in the form of trigonometric functions which, when summed for each image data point (i.e., pixel) of the spatial domain, yields the value of the parameter used to characterize the image at that particular image data point in the spatial domain. Such a representation may be extended to cover all image data points of an image.

In the spatial domain, original image data may be represented as a continuous function of spatial position, designated $s_c(y,x)$ for the two-dimensional case. For most applications it is acceptable, as well as advantageous, to sample this continuous-space image along the horizontal and vertical directions at $x=iT_h$ and $y=jT_v$ where i and j are integer indices and $T_h$ and $T_v$ are the horizontal and vertical sampling periods, respectively. This yields a matrix of points, $s_c(jT_v,iT_h)$ which shall be identified henceforth with the discrete signal designated as $s(j,i)$ for the two-dimensional case where the lower case, s, designates the spatial domain, i is the index of rows, j is the index of columns, and i and j can be initialized to start at zero. In the frequency domain, matrices can also be used to mathematically describe an image as a set of transform coefficients (also referred to as frequency coefficients) which represent frequency data in a transform matrix conventionally designated, $S(v,u)$, where the upper case, S, designates the frequency domain, u is the index of rows and v is the index of columns.

Spatial image data points may be transformed to the frequency domain using transformations such as Fourier transforms or discrete cosine transforms. The use of discrete cosine transforms and inverse discrete cosine transforms for image compression is well known in the art and, in fact, the practice has been adopted as standard in industry by The Joint Photographic Experts Group (JPEG) and the Motion Picture Expert Group (MPEG), which were created as part of a joint effort of the Consultative Committee on International Telegraphy and Telephony (CCITT) and The International Standards Organization (ISO).

When a discrete even cosine transformation (hereinafter DCT) is used, the frequency domain is referred to as the DCT domain and the frequency coefficients are referred to as DCT coefficients. Conventionally, transforming data from the spatial domain to the frequency domain is referred to as a forward transformation, whereas transforming data from the frequency domain to the spatial domain is referred to as an inverse transformation. Hence, a forward discrete cosine transformation is defined as a transform that maps an image from the original image data points $s(j,i)$ in the spatial domain to DCT coefficients $S(v,u)$ in the DCT domain according to the basis function of the forward DCT, whereas an inverse discrete even cosine transformation (or IDCT) is defined as a transform that maps the DCT coefficients $S(v,u)$ from the DCT domain to reconstructed image data points $\hat{s}(j,i)$ in the spatial domain according to the basis function of the IDCT.

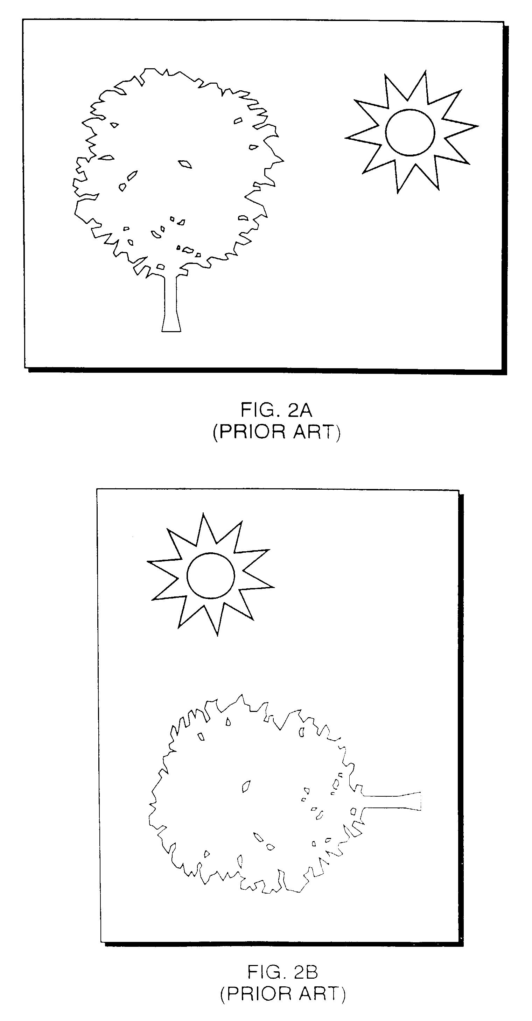

Processing an electronically acquired image in an image processing system sometimes includes shearing or rotating the image. When an image such as the one shown in Figure 2A is rotated, the result is shown in Figure 2B. Rotation is useful in various applications such as image alignment, described using bilinear interpolation in "The Image Processing Handbook" by John C. Russ, 1992 CRC Press Inc., pp. 95-100.

Image rotation in a digital image processing system is described in "CVGIP: GRAPHICAL MODELS AND IMAGE PROCESSING", Vol. 54, No. 4, July, pp. 340-344 (1992) which analyzes and evaluates various methods involving one, two and three pass rotation algorithms for skewing an image. Each algorithm stems from different factorizations of the basic rotation matrix. Interpolation is discussed as a convolution or weighted sum which involves linear combinations in the x and y directions of a two dimensional image representation.

The primary object of the current invention is to provide a system for shearing or rotating an image which is more efficient than existing systems and which is complementary to international compression standards such as ISO/IEC 10918-1, Section A.3.3 set by the International Organization of Standards, Joint Photographic Experts Group and similar standards recognized by the Motion Picture Experts Group. Other objects of the invention will, in part, appear hereinafter and, in part, be obvious when the following detailed description is read in conjunction with the drawings.

SUMMARY OF THE INVENTION

An image processing system for skewing (i.e. shearing) or rotating an image includes: an image acquisition device for acquiring an image signal representing an image; a first memory for buffering the image signal; a second memory for storing predetermined discrete cosine transform coefficients; a matrix multiplier for multiplying the image signal times the predetermined coefficients to produce an output signal; a third memory for buffering the output signal; control sequencer logic for controlling operation of the image processing system; and an output device for providing a skewed or rotated image corresponding to the output signal.

Image rotation according to the inventive system is facilitated by performing a series of shearing operations on image data points representing an image in the spatial domain. A first shearing operation produces a first sheared image by shearing the original image. A second shearing operation produces a second sheared image by shearing the first sheared image. A third shearing operation produces a third sheared image corresponding to a rotated image by shearing the second sheared image. For each shearing operation the image data points are transformed into DCT coefficients in a frequency domain using a discrete even cosine transform (DCT). Thereafter, skewed image data points are generated by taking a modified inverse discrete even cosine transform (IDCT) of the DCT coefficients using a modified IDCT basis function dependent upon either a horizontal or vertical offset.

BRIEF DESCRIPTION OF THE DRAWINGS

The aforementioned aspects and other features of the invention are described in detail in conjunction with the accompanying drawings in which the same reference numerals are used throughout for denoting corresponding elements and wherein:

Figure 1 is a preferred embodiment of an electronic imaging system according to the present invention;
Figure 2A is an image;
Figure 2B is the image of Figure 2A rotated 90 degrees counterclockwise;
Figure 3A is a detailed block diagram of the electronic imaging system of Figure 1;
Figure 3B is a logic diagram of the matrix multiplier 358 of Figure 3A;
Figure 3C is a timing diagram of signals used and generated by the system of Figure 3A;
Figure 4A is a flowchart, according to the invention, for horizontally skewing an image represented in a two-dimensional spatial plane using the system of Figure 3A;
Figure 4B is a block diagram of the steps of block 446 of Figure 4A for transforming segments of image data points, whereby each segment includes all the image data points of a row;
Figure 4C is a block diagram of the steps of block 446 of Figure 4A for transforming segments of image data points, whereby each segment has fewer image data points than the total number of image data points in the row;
Figure 5A is a flowchart, according to the invention, for vertically skewing an image represented in a two-dimensional spatial plane using the system of Figure 3A;
Figure 5B is a block diagram of the steps of block 506 of Figure 5A for transforming segments of image data points, whereby each segment includes all the image data points of a column; and
Figure 5C is a block diagram of the steps of block 506 of Figure 5A for transforming segments of image data points, whereby each segment has fewer image data points than the total number of image data points in a column.

DETAILED DESCRIPTION OF THE PREFERRED EMBODIMENTS

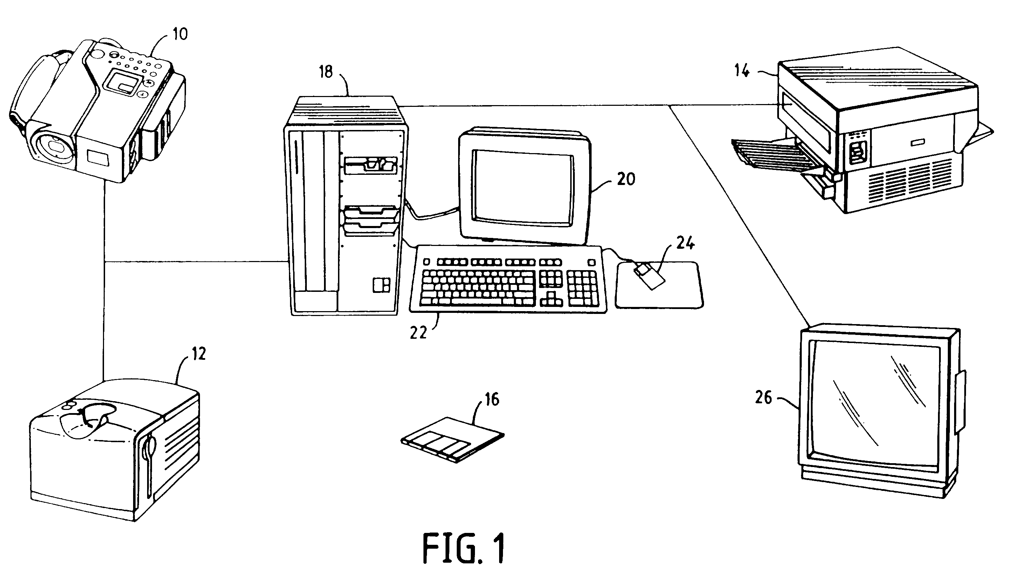

The present invention relates to an image processing system and associated image processing methods for shearing or rotating an image of a scene. Figure 1 illustrates one exemplary embodiment of such a system. As can be seen, Figure 1 illustrates an electronic image processing system where an image signal source, such as an electronic still camera 10 or a scanner 12, provides an electronic image signal which represents an image of the subject (not shown). A computer 18 receives the electronic signal from the image signal source and thereafter processes the image signal electronically to provide any number of known image processing functions such as resizing, sharpening, noise removal, reflection, edge detection or rotation. The processed image can be transmitted, i.e. output, to any destination device or destination application such as a diskette 16, an user monitor 20, a printer 14, or a remote monitor 26. Operator interaction with the system is facilitated by use of a keyboard 22 or a mouse 24. Of course, the components shown in Figure 1 are merely exemplary rather than all inclusive of the many equivalent devices known by those skilled in the art. For instance, the image signal source could include any device which acts as an image signal source such as an electronic camera, a scanner, a camcorder, a charge coupled device, a charge injected device, etc. Also, it is noteworthy that the processing of the image need not necessarily occur solely within the computer 18. Indeed, various phases or aspects of the image processing could occur in the image signal source, the computer, or the destination output device.

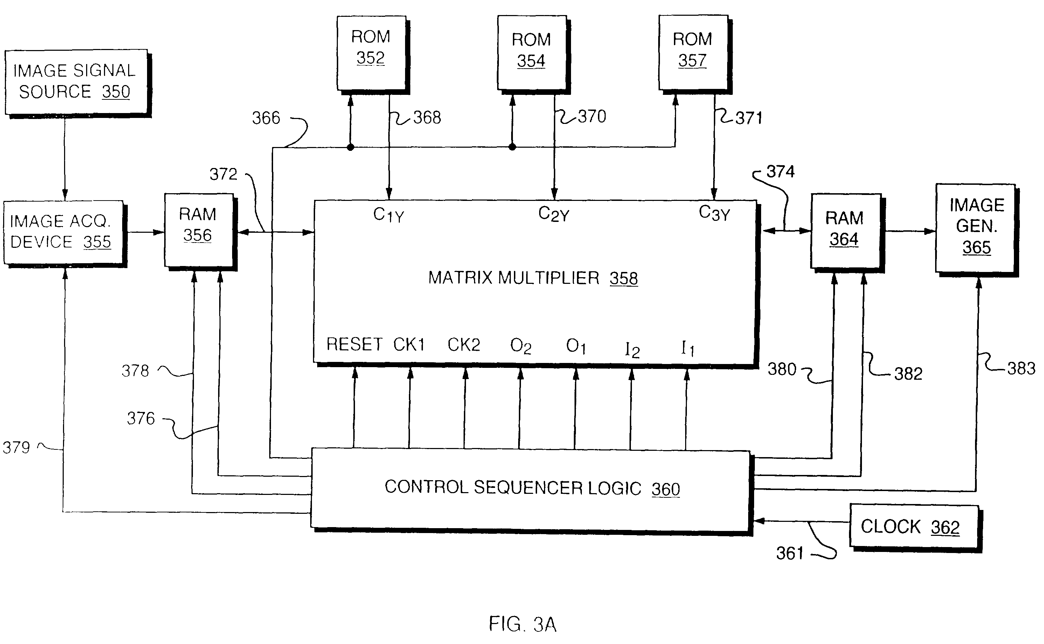

The image processing system of Figure 1 is further detailed in Figure 3A which includes an image signal source 350 connected to an image acquisition device 355 which, in turn, is connected to RAM 356 and control sequencer logic 360. The RAM 356 is also connected to a matrix multiplier 358 and the control sequencer logic 360. The control sequencer logic 360 and the matrix multiplier 358 are connected to one another and are both connected to ROM 352, ROM 354, ROM 357 and RAM 364. The RAM 364 and the control sequencer logic 360 are both connected to an image generator 365 which represents any type of device capable of outputting an image, such as a printer, a CRT display, etc. The control sequencer logic 360 receives a clock pulsetrain 361 from system clock 362.

Operation of the image processing system of Figure 3A, useful for image shearing and rotation, will be more easily understood in view of the following section on DCT mathematics.

## 1. DCT Mathematics

This section sets forth certain fundamental concepts relating to forward and inverse discrete cosine transforms.

An image is typically made up of a two-dimensional PxQ array of descriptors called pixels or image data points, where P is the number of rows and Q is the number of columns representing the image. The image can be represented by either image data points in the spatial domain, or by corresponding DCT coefficients in the frequency domain. A forward DCT generates the DCT coefficients by taking a discrete even cosine transformation (DECT abbreviated as DCT) of the image data points. Conversely, an inverse discrete even cosine transformation (IDECT abbreviated as IDCT) generates the IDCT coefficients (i.e. reconstructed image data points) by taking an inverse discrete cosine transformation of the DCT coefficients.

A DCT transformation can occur in any number of dimensions as understood by those skilled in the art. In the following one-dimensional example, a row (more generically referred to as a segment) of N image data points s(j) can be transformed from the spatial domain to corresponding DCT coefficients S(v) in the frequency domain in accordance with equation (1).

$$S(v) = C_v \sqrt{\frac{2}{N}} \sum_{j=0}^{N-1} s(j) \cos\frac{(2j+1)v\pi}{2N} \tag{1}$$

where:

$0 \leq v \leq (N-1)$, v an integer;
s(j) represents the matrix of image data points in the segment;
S(v) represents the corresponding matrix of DCT coefficients;
N represents the number of image data points in the segment;

$$C_v = \frac{1}{\sqrt{2}}$$

for v = 0; and
$C_v = 1$ for $v \neq 0$.

The DCT coefficients S(v) are determined from equation (1) where the normalized cosine basis terms are derived for a segment having N image data points. The value for S(0) is determined for v = 0 by summing each of the image data points s(j) for $0 \leq j \leq (N-1)$ times the cosine terms of the basis function. The value for S(1) is determined as the summation of image data points s(j) times the cosine terms for v = 1. This procedure, which indexes first on v and then on j, is repeated for derivation of DCT coefficients S(0) through S(N-1).

A modified inverse discrete cosine transformation is mathematically defined in equation (2) where the one-dimensional matrix S(v) of DCT coefficients is transformed to a reconstructed matrix $\hat{s}(y)$ of reconstructed image data points, and y is defined as a real number within the given range.

$$\hat{s}(y) = \sqrt{\frac{2}{N}} \sum_{v=0}^{N-1} C_v\ S(v)\ \cos\frac{(2y+1)v\pi}{2N} \qquad (2)$$

where:

0 ≤ y ≤ (N -1), y a real number;
S(v) represents the matrix of DCT coefficients;
$\hat{s}(y)$ represents the spatial matrix of reconstructed image data points;
N represents the number of image data points in the segment;

$$C_v = \frac{1}{\sqrt{2}}$$

for v = 0; and
$C_v = 1$ for v ≠ 0.

If the DCT coefficients S(v) of equation (1) are computed from a set of image data points s(j) and the reconstructed image data points $\hat{s}(y)$ of equation (2) are computed from the corresponding DCT coefficients S(v), then s(j) ≡ $\hat{s}(y)$ when y=j, and the process is referred to as invertible or one-to-one mapping since the reconstructed image data points of $\hat{s}(y)$ are identical, within limits, to the original image data points of s(j). By evaluating y in equation (2) at other (non-integer) values where 0 ≤ y ≤ (N -1), a modified IDCT is obtained which can be used for various processes such as the interpolation of values falling between discrete image data points which represent an image.

In determining the values representing the reconstructed image data points $\hat{s}(y)$ using equation (2), $\hat{s}(0)$ is determined by summing each of the DCT coefficients S(v) times the cosine terms of the inverse basis function for y = 0. For example, the value for $\hat{s}(0.5)$ is determined as the summation of DCT coefficients S(v) times the cosine terms for y = 0.5. This procedure, which indexes first on y then on v, is repeated for derivation of all desired reconstructed image data points $\hat{s}(y)$ where 0 ≤ y ≤ (N -1).

As earlier noted, the above mathematics can be readily expanded to multiple dimensions as known by one of ordinary skill in the art. For instance, an image can be represented in the spatial domain in two-dimensional format as described in parent application '795, where s(y,x) represents the image data points at real values y and x in the spatial domain, S(v,u) represents the corresponding DCT coefficients in the frequency domain, x ranges from 0 to (P-1), y ranges from 0 to (Q-1), P represents the total number of rows, and Q represents the total number of columns. The image data points s(y,x) may represent, but are not limited to, parameters such as brightness, luminance, color or hue.

Both equations (1) and (2) can alternatively be expressed in matrix notation. The matrix notation (without indices) for equation (1) is:

$$S = FB \cdot s \qquad (3)$$

where S represents the matrix of DCT coefficients, s represents the matrix of image data points in the spatial domain, and FB represents the forward DCT basis matrix. The matrix notation for equation (2) is:

$$\hat{s} = IB \cdot S \qquad (4)$$

where $\hat{s}$ represents the spatial matrix of reconstructed image data points, and IB represents the inverse DCT basis matrix for the desired output points (i.e. reconstructed image data points). Combining matrix equations (3) and (4) will reduce the number of arithmetic operations as opposed to performing the matrix algebra in two different steps as previously described. Combining matrix equations (3) and (4) yields:

$$\hat{s} = IB \cdot (FB \cdot s)$$

$$= MB \cdot s \qquad (5)$$

where MB is a combined DCT basis matrix derived from matrix multiplication of the inverse DCT basis matrix IB times the forward DCT basis matrix FB. The combined DCT basis matrix MB can be contemporaneously calculated while solving equation (5), or MB can be precalculated and stored in a look-up table.

## 2. Image Rotation Hardware

The preferred embodiment of an image rotation system shown in Figure 3A includes: image signal source 350; image acquisition device 355; matrix multiplier 358; random access memory (RAM) image buffers 356 and 364; coefficient read only memory (ROM) 352, 354 and 357; control sequencer logic 360; master clock 362; and image generator 365. The master clock 362 produces a master clock signal 361 which is used by the control sequencer logic 360 to generate clock signals CK1 and CK2. The image acquisition device 355 could be any hardware for acquiring an image from the source 350, such as an input port, an A/D converter, etc. Similarly, the image generator 365 could be any device or system for generating an image from the coefficients stored in RAMs 356 or 364, such as a printer, cathode ray tube, etc. This overall hardware configuration is general purpose for implementing a variety of matrix product operations.

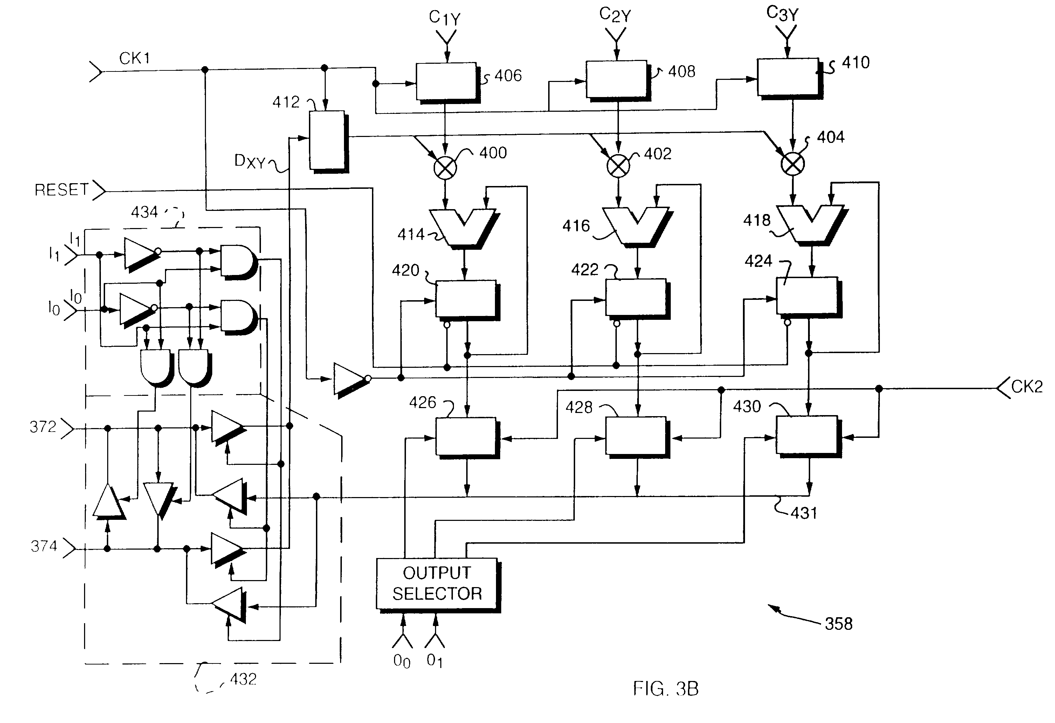

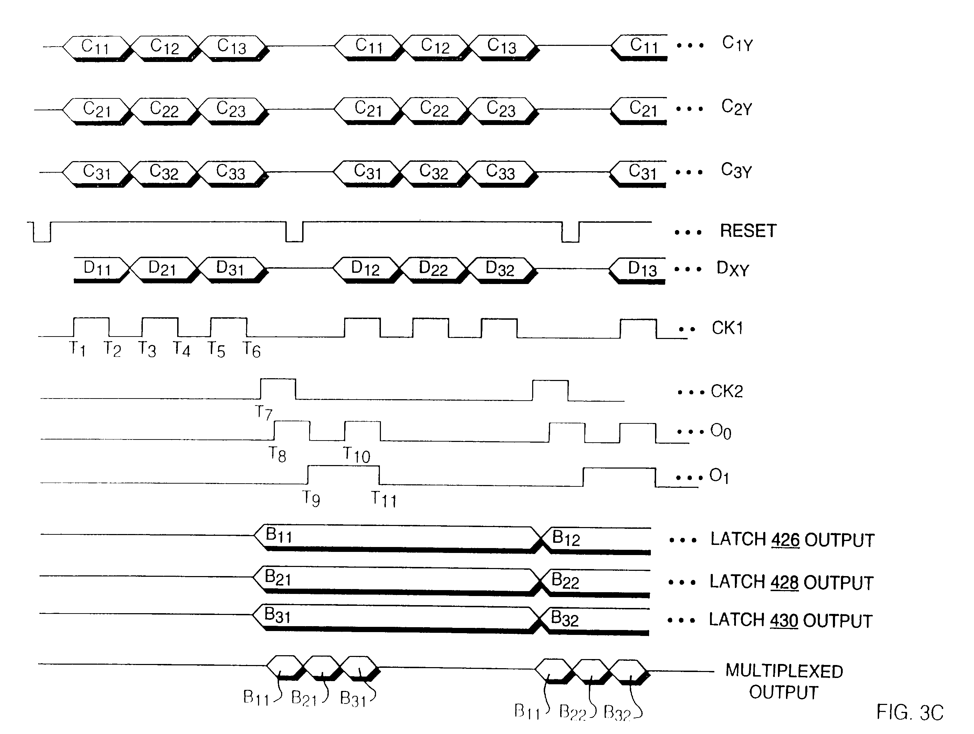

Referring to Figures 3A, 3B and 3C, the matrix multiplier logic 358 is a fixed point parallel arithmetic processor capable of computing a 3x3 matrix product in nine CK1 clock cycles. The control sequencer logic 360 generates clock pulses CK1 and CK2 from the master clock 362. The buffers 356 and 364 are random access memories to buffer the input and output images; the read only memories 352, 354 and 357 store precomputed coefficient matrices; and the control sequencer logic 360 is used to handle control signals, timing signals, and memory address signals.

The matrix multiplier logic 358 is a three fixed-point multiplier accumulator (MAC) array shown in detail in Figure 3B, with input/output latches and two bi-directional data buses 372 and 374. The buses 372 and 374 are configurable to transmit data directly between RAM 356 and RAM 364 in pass through mode, or to transmit data to the matrix multiplier logic 358 for processing in process mode according to Truth Table I which defines the functions of data buses 372 and 374 as controlled by signals $I_0$ and $I_1$.

TRUTH TABLE I

| $I_0$ | $I_1$ | 372 | 374 | Mode |
|---|---|---|---|---|
| 0 | 0 | IN | OUT | Pass thru |
| 1 | 0 | IN | OUT | Process |
| 0 | 1 | OUT | IN | Process |
| 1 | 1 | OUT | IN | Pass thru |

The three MAC units include multipliers 400, 402, and 404 followed by the adder and accumulator pairs {414, 420}, {416, 422}, and {418, 424}, respectively. The outputs of the accumulators 420, 422 and 424 are stored, respectively, in output latches 426, 428, and 430. These provide temporary storage to multiplex the results onto the common output bus 431.

The control sequencer logic 360 controls the memories and data buses as well as generating appropriate timing signals for the matrix multiplier logic 358. Specifically, the control sequencer logic 360 provides to RAM memories 356 and 364, respectively, address data on lines 378 and 382, and read/write (R/$\overline{W}$) control data on lines 376 and 380. The control sequencer logic 360 also provides the matrix multiplier logic 358 with clock signals CK1 and CK2 (derived from master clock signal 361), bus directional signals $I_0$, $I_1$; output multiplex control signals $O_0$, $O_1$, and addresses on line 366 for ROMs 352, 354 and 357. The control sequencer logic 360 is easily implemented with a microcontroller or programmable logic array (PLA), the choice being application dependent. The former is generally more flexible from a programming standpoint but somewhat higher in cost than the latter.

The operation of the matrix multiplier logic 358 is easily understood by considering an example of a 3x3 matrix multiplication where C represents a coefficient matrix, D represents a source image data matrix, and B represents the result of matrix multiplying C times D. Thus, for

$$\begin{pmatrix} B_{11} & B_{12} & B_{13} \\ B_{21} & B_{22} & B_{23} \\ B_{31} & B_{32} & B_{33} \end{pmatrix} = \begin{pmatrix} C_{11} & C_{12} & C_{13} \\ C_{21} & C_{22} & C_{23} \\ C_{31} & C_{32} & C_{33} \end{pmatrix} \times \begin{pmatrix} D_{11} & D_{12} & D_{13} \\ D_{21} & D_{22} & D_{23} \\ D_{31} & D_{32} & D_{33} \end{pmatrix} \tag{6}$$

consider the first column of B which is the sums of products of the rows of C and the first column of D,

$$\begin{pmatrix} B_{11} \\ B_{21} \\ B_{31} \end{pmatrix} = \begin{pmatrix} C_{11}D_{11} & + & C_{12}D_{21} & + & C_{13}D_{31} \\ C_{21}D_{11} & + & C_{22}D_{21} & + & C_{23}D_{31} \\ C_{31}D_{11} & + & C_{32}D_{21} & + & C_{33}D_{31} \end{pmatrix} \tag{7}$$

The timing diagram in Figure 3C shows the relationship of the control and data signals for this example. The computation proceeds sequentially with the evaluation of the first, second, and third columns of the B matrix. The process begins with the clearing of the accumulators by the negative RESET pulse received by the matrix multiplier logic 358 from the control sequencer logic 360. The first column of matrix C, that is, $C_{11}$, $C_{21}$, $C_{31}$, and the first element of the first column of matrix D, that is $D_{11}$, are transferred to input latches 406, 408, 410 and 412 respectively at time $T_1$ of clock pulse CK1. Specifically, $C_{11}$ is received from ROM 352 by input latch 406, $C_{12}$ is received from ROM 354 by input latch 408, $C_{13}$ is received from ROM 357 by input latch 410, and $D_{11}$ is received through the bus transmitter 432 from RAM 356 which stores the source image. The control signals $I_0$ and $I_1$ control both the transfer, and the direction of transfer of data between the matrix multiplier logic 358 and RAMs 356 and 364 according to Truth Table I. The logic corresponding to Truth Table I is shown by logic 434 and bus transmitter 432. At time $T_2$ the products $C_{11}D_{11}$, $C_{21}D_{11}$, and $C_{31}D_{11}$ are stored in accumulators 420, 422, and 424, respectively. Logic (not shown) for scaling the outputs, i.e. truncating data, would typically follow the accumulators, as well known by those skilled in the art, to handle data overflow conditions. At time $T_3$ the second column of matrix C, that is, $C_{12}$, $C_{22}$, and $C_{32}$, and the second element $D_{21}$ of the first column of D are transferred to the input latches 406, 408, 410 and 412, respectively. The partial sum of products, that is, $C_{11}D_{11}+C_{12}D_{31}$, $C_{21}D_{11}+C_{22}D_{21}$, $C_{31}D_{11}+C_{32}D_{21}$ are stored at time $T_4$ in accumulators 420, 422, and 424 respectively. Of course, multiplication occurs in multipliers 400, 402, 404 and addition occurs in adders 414, 416, 418. The process repeats for the third column of C and third element of the first column of D resulting at $T_6$ in the first column of B having elements $\{C_{11}D_{11}+C_{12}D_{21}+C_{13}D_{31}\}$, $\{C_{21}D_{11}+C_{22}D_{21}+C_{23}D_{31}\}$ and $\{C_{31}D_{11}+C_{32}D_{21}+C_{33}D_{31}\}$ which were obtained as the sum of the products of the rows C and the first column of D (see equation (7)).

At the rising edge of clock pulse CK2 at time $T_7$ the data from accumulators 420, 422, and 424 is transferred to the output latches 426, 428, and 430, respectively. Output multiplex control signals $O_0$ and $O_1$ time multiplex the outputs of the output latches onto data bus 372 or 374 in accordance with Truth Table 1 at times $T_8$, $T_9$, and $T_{10}$. The whole process is repeated in this fashion for computing the remaining second and third columns of B in equation (6).

The above implementation of the hardware of Figures 3A and 3B describes one complete shear of the image data points representing the image. Of course, to properly carry out image rotation as described in the following section on Image Rotation Methodology, three shears are required. Thus, the data points stored in RAM 364 after one shearing operation should be transferred in pass-through mode (see Truth Table I) from RAM 364 through matrix multiplier 358 to RAM 356. The shearing process repeats until all three shears have been accomplished and the resultant image data points stored in RAM 364 represent the rotated image.

In sum, the matrix multiplier logic 358 of Figure 3A is ideally suited to perform image rotation. The first and second rows of both the horizontal and vertical transform matrices are stored in ROMs 352 and 354, respectively; the source image is stored in RAM 356; and the rotated image is stored in RAM 364. Note that the matrix multiplier logic 358 is clearly able to handle products of matrices other than order three. For example, vector products, as well as 2x2 matrix products can be easily processed.

Of course functional equivalents of the above described components would work equally well in implementing the image rotation device. For instance, the memories are not limited to RAMs or ROMs but include any type of known memory devices. Also as earlier noted, the coefficients stored in ROMs 352, 354 and 357 could be precalculated as a combined reconstruction vector to be multiplied times the source pixels received from RAM 356 rather than as precalculated modified IDCT basis coefficients to be multiplied times precalculated DCT coefficients stored in RAM 356.

3. Image Rotation Methodology

The image processing system of Figure 3A provides image rotation in the DCT domain by decomposing the rotation operation into a sequence of shearing operations. A rotation matrix can be represented in the form:

$$\begin{pmatrix} \cos\theta & -\sin\theta \\ \sin\theta & \cos\theta \end{pmatrix}$$

where $\theta$ is the desired angle of rotation. This rotation matrix can be decomposed into a product of shearing matrices where

$$\begin{pmatrix} 1 & 0 \\ \beta & 1 \end{pmatrix}$$

represents a vertical shearing matrix for shearing an image vertically and

$$\begin{pmatrix} 1 & \alpha \\ 0 & 1 \end{pmatrix}$$

represents a horizontal shearing matrix for shearing an image horizontally. The rotation matrix can be decomposed as either:

$$\begin{pmatrix} \cos\theta & -\sin\theta \\ \sin\theta & \cos\theta \end{pmatrix} = \begin{pmatrix} 1 & \alpha \\ 0 & 1 \end{pmatrix} \begin{pmatrix} 1 & 0 \\ \beta & 1 \end{pmatrix} \begin{pmatrix} 1 & \alpha \\ 0 & 1 \end{pmatrix} \qquad (8)$$

where the vertical shearing factor is defined as $\beta = \sin\theta$ and the horizontal shearing factor is defined as $\alpha = -\tan(\theta/2)$, or;

$$\begin{pmatrix} \cos\theta & -\sin\theta \\ \sin\theta & \cos\theta \end{pmatrix} = \begin{pmatrix} 1 & 0 \\ \beta & 1 \end{pmatrix} \begin{pmatrix} 1 & \alpha \\ 0 & 1 \end{pmatrix} \begin{pmatrix} 1 & 0 \\ \beta & 1 \end{pmatrix} \qquad (9)$$

where the vertical shearing factor is defined as $\beta = \tan(\theta/2)$ and the horizontal shearing factor is defined as $\alpha = -\sin\theta$.

In the case of the decomposition in equation (8), an input image is rotated by an angle $\theta$ by (1) horizontally shearing the input image to produce a first skewed image (2) vertically shearing the first skewed image to produce a second skewed image, and (3) horizontally shearing the second skewed image to produce the rotated image.

In the case of the decomposition in equation (9), an input image is rotated by an angle $\theta$ by (1) vertically shearing the input image to produce a first skewed image (2) horizontally shearing the first skewed image to produce a second skewed image, and (3) vertically shearing the second skewed image to produce the rotated image.

In the general case of image rotation using the decomposition in either equation (8) or (9), the image rotation method includes the steps of:

(i) providing a first spatial matrix of pixels representing an original image in two dimensions;
(ii) generating a first shear matrix (also referred to as a skew matrix) corresponding to a first skewed image by shearing the first spatial matrix in a first dimension;
(iii) generating a second shear matrix corresponding to a second skewed image by shearing the first shear matrix in a second dimension; and
(iv) generating a third shear matrix corresponding to a third skewed image, i.e. the image rotated by $\theta$, by shearing

the second shear matrix in the first dimension.

A major advantage behind performing the shearing in the above manner is the decoupling of the horizontal and vertical shears, so that a new sampling grid for each shear step need only be computed in one dimension. Of course, it is not always necessary or desirable to shear all pixels of an image. In some instance, shearing a portion of the image is sufficient.

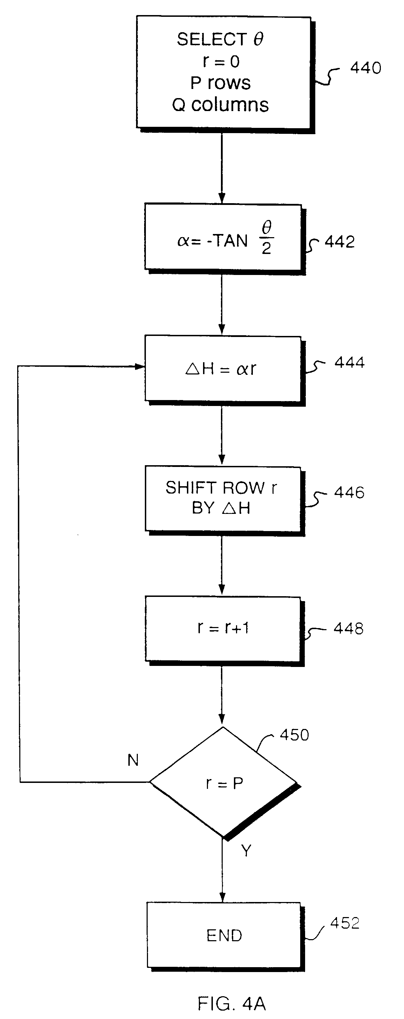

An image, represented as s(j,i), can be horizontally sheared as shown in Figure 4A according to the decomposition in equation (8), where $\theta$ is initialized to a desired angle of rotation, and the row index r is initialized to zero in block 440. P represents the total number of rows in the image, and Q represents the total number of columns in the image. Since the image is represented as a PxQ matrix, Q also represents the total number of image data points in each row. Thus, if a segment size equal to the total number of pixels in a row is selected, then Q columns in Figure 4A equates with N image data points in equation (1). In block 442, the horizontal shearing factor $\alpha = -\tan(\theta/2)$ is calculated and in block 444 the horizontal offset $\Delta H$ is determined as the product of the horizontal shearing factor $\alpha$ times the row index r (i.e. $\Delta H = \alpha r$).

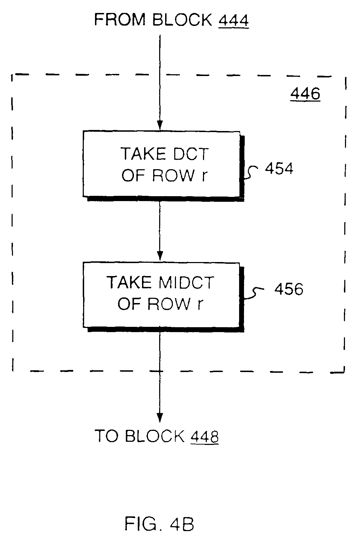

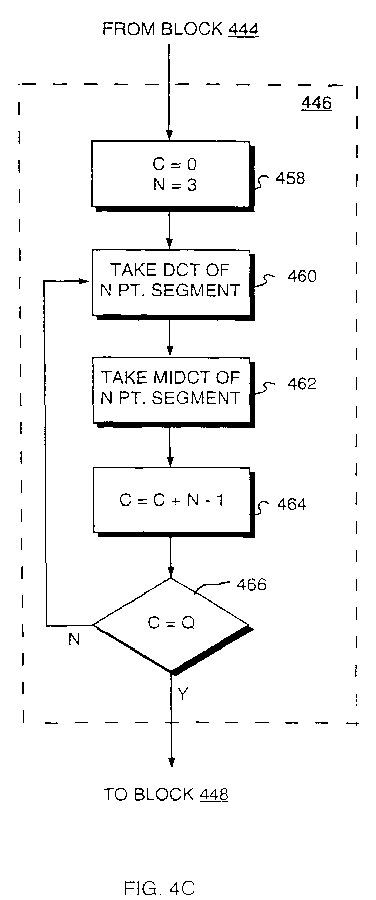

In block 446 all pixels in row r are shifted by the same horizontal offset $\Delta H$. This is done using the process shown in either Figure 4B or 4C. Figure 4B shows the appropriate steps for shifting and transforming a complete row of image data points in one step whereas Figure 4C shows the appropriate steps for shifting and transforming a row of image data points by first dividing the row into N point segments, where N is equal to or less than the number of pixels in a row. Specifically, the DCT transformation process of Figure 4C is performed by taking DCT transformations of adjacent three-point segments (i.e. N=3) of image data points having a one-point overlap, whereas the DCT transformation process of Figure 4B is performed by taking DCT transformations for N=Q.

For either Figure 4B or 4C, each pixel of a given row is shifted by the value of the horizontal offset $\Delta H$, which is generally not an integer and can be written as:

$$\Delta H = I_{\Delta H} + f_{\Delta H}$$

where $I_{\Delta H}$ and $f_{\Delta H}$ are the integer and fractional parts of $\Delta H$, respectively. The shift by $\Delta H$ can be implemented by computing the interpolated values of the IDCT coefficients $\hat{s}(y)$ as though the shift was by $f_{\Delta H}$ and then just offsetting the result by $I_{\Delta H}$ in the output matrix. The modified IDCT of equation (2) is then evaluated according to equation (10) to compensate for the fractional part of the horizontal offset, $f_{\Delta H}$.

$$\hat{s}(j-1) \triangleq \hat{s}(y)\Big|_{y=j-f_{\Delta H}} = \sqrt{\frac{2}{N}} \sum_{v=0}^{N-1} C_v\, S(v)\, \cos\frac{v\pi}{2N}\,(2(j-f_{\Delta H})+1) \qquad (10)$$

where:

  $0 < (j-f_{\Delta H}) \le (N-1)$, j an integer;
  $0 < y \le (N-1)$, y a real number;
  S(v) represents the matrix of DCT coefficients;
  $\hat{s}(y)$ represents the spatial matrix of reconstructed (skewed) image data points;
  $\hat{s}(j-1)$ represents $\hat{s}(y)$ with the y index changed to integer values;
  N represents the number of DCT coefficients in the segment;

$$C_v = \frac{1}{\sqrt{2}}$$

  for v = 0; and
  $C_v = 1$ for $v \ne 0$.

For the above values of y, there will be (N-1) reconstructed image data points whether N represents either the total number of pixels in the row (Fig. 4B) or a lesser number of pixels of a segment (Fig. 4C). All of the reconstructed image data points will lie in the spatial range between $\hat{s}(0)$ and $\hat{s}(N-1)$.

In block 448, the row index r is incremented by one, then tested against the total number of rows P in block 450. If r < P, then the sequence of steps in blocks 444-450 is repeated. In effect, each pass through blocks 444-450 skews another row of pixels of the image. Completion of the shearing of each row in the image results in a first horizontally skewed image.

The preferred implementation of the above skewing method is achieved by segmenting the desired row of the image into smaller, overlapping blocks of image data points of size N as shown by the steps of Fig. 4C. It has been empirically determined that a three or four point DCT with a one-point overlap between adjacent segments provides excellent results (although any segment size N could be selected). When N=2, the speed of computation is high but the accuracy of the results suffers. In contrast when N=8, the accuracy of the interpolation is high but computational speed is slow. Thus, a preferred embodiment provides a row of image data points subjected to a three-point DCT according to equation (1) when N=3. Thus, N is set to 3 and the column index c is initialized to zero in block 458. Row r equates to index i and column c equates to index j in DCT equations (1) and (10) for an image represented spatially as s(j,i). In block 460, a DCT according to equation (1) is taken of the first three-point segment of row r, namely s(0), s(1) and s(2). The modified IDCT of equation (10) is used in block 462 to reconstruct spatial image data points $\hat{s}(0)$ and $\hat{s}(1)$. The reconstructed image data point $\hat{s}(2)$, which is overlapped with a second three-point segment, will be calculated and included in the second segment of reconstructed image data points. The values of $\hat{s}(0)$ and $\hat{s}(1)$ are stored or otherwise saved as reconstructed image data points of the horizontally skewed image. In block 464 the column index c is incremented to c = c+N-1. In block 466, it is determined whether or not all of the pixels have been processed for row r. If all of the pixels have been processed, then the decision block is answered in the affirmative and the overall horizontal shearing process continues in block 448. If on the other hand, all of the pixels in row r have not been processed, then the DCT transformation of the next N-point segment continues in block 460. In the current example, c = 2, and the next three-point DCT occurs on pixels in the same row spatially located at s(2), s(3) and s(4). The modified IDCT of equation (10) is used to reconstruct spatial image data points $\hat{s}(2)$ and $\hat{s}(3)$ in block 462. The values of $\hat{s}(2)$ and $\hat{s}(3)$ are saved for the matrix of reconstructed image data points. The above overlapping procedure continues for each pixel of the image resulting in a first horizontally skewed image represented as a matrix of reconstructed image data points.

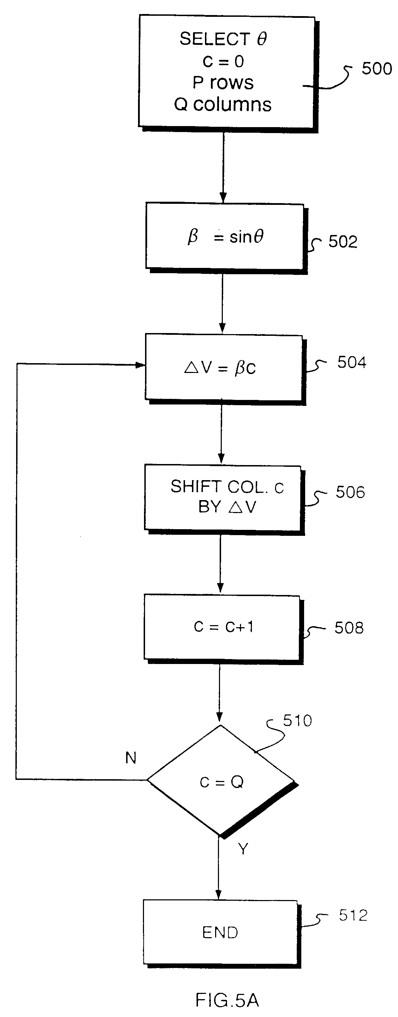

Once the image is horizontally skewed to form the first horizontally skewed image according to decomposition equation (8), then the second step of equation (8) calls for vertically shearing the first horizontally skewed image. This can be accomplished by following the steps of Figure 5A.

In block 500, θ maintains the same value selected for horizontal skewing, and the column index c is initialized to zero. Since the image is represented as a PxQ matrix, P also represents the total number of pixels in each column. In block 502, the vertical shearing factor β = sinθ is calculated and in block 504 the vertical offset ΔV is determined as the product of the vertical shearing factor β times the column index c (i.e. ΔV = βc).

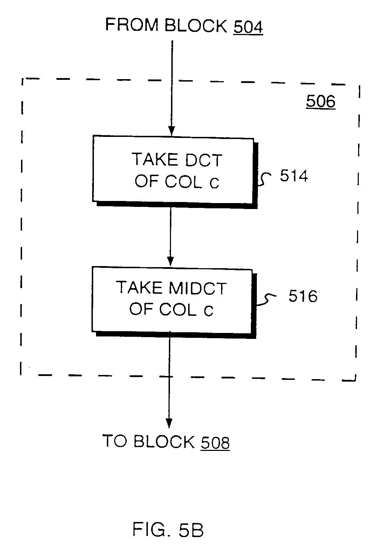

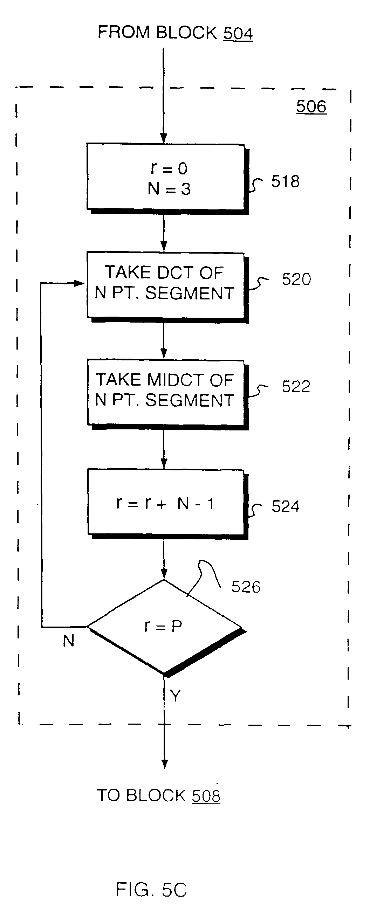

In block 506 all pixels in column c are shifted by the same vertical offset ΔV. This is done using the process shown in either Figure 5B or 5C. Figure 5B shows the appropriate steps for shifting and transforming a complete column of image data points in one step whereas Figure 5C shows the appropriate steps for shifting and transforming a column of image data points by first dividing the column into N point segments, where N is equal to or less than the number of pixels in a column. Specifically, the DCT transformation process of Figure 5C is performed for the present embodiment by taking DCT transformations of adjacent three-point segments (i.e. N=3) of image data points having a one-point overlap, whereas the DCT transformation process of Figure 5B is performed by taking DCT transformations for N=P.

For either Figure 5B or 5C, each pixel of a given column is shifted by the value of the vertical offset ΔV, which is generally not an integer and can be written as:

$$\Delta V = I_{\Delta V} + f_{\Delta V}$$

where $I_{\Delta V}$ and $f_{\Delta V}$ are the integer and fractional parts of ΔV, respectively. The shift by ΔV can be implemented by computing the interpolated values of the IDCT coefficients $\hat{s}(y)$ as though the shift was by $f_{\Delta V}$ and then just offsetting the result by $I_{\Delta V}$ in the output matrix. The modified IDCT of equation (2) is then evaluated according to equation (11) to compensate for the fractional part of the vertical offset, $f_{\Delta V}$.

$$\hat{s}\ (j-1)\ \triangleq\ \hat{s}(y)\ \Big|_{y=j-f_{\Delta v}} = \sqrt{\frac{2}{N}}\ \sum_{v=0}^{N-1}\ C_v\ S(v)\ \cos\frac{v\pi}{2N}\ (2(j-f_{\Delta v})+1) \qquad (11)$$

where:

$0 < j-f_{\Delta V} \leq (N-1)$, j an integer;

0 < y ≤ (N-1), y a real number;

S(v) represents the matrix of DCT coefficients;

$\hat{s}$(y) represents the spatial matrix of reconstructed (skewed) image data points;

$\hat{s}$(j-1) represents $\hat{s}$(y) with the y index changed to integer values;

N represents the number of DCT coefficients in the segment;

$$C_v = \frac{1}{\sqrt{2}}$$

for v = 0; and

$C_v$=1 for v ≠ 0.

For the above values of y, there will be (N-1) reconstructed image data points whether N represents either the total number of pixels in the column (Fig. 5B) or a lesser number of pixels of a segment (Fig. 5C). All of the reconstructed image data points will lie in the spatial range between $\hat{s}$(0) and $\hat{s}$(N-1).

In block 508, the column index c is incremented by one, then tested against the total number of columns Q in block 510. If c < Q, then the sequence of steps in blocks 504-510 is repeated. In effect, each pass through blocks 504-510 skews another column of pixels of the image. Completion of the shearing of each column in the first horizontally skewed image results in a first vertically skewed image.

As described above, the current example uses a three-point DCT with a one-point overlap between adjacent segments. Specifically, a column of image data points is subjected to a three-point DCT according to equation (1) when N=3. Thus, N is set to 3 and the row index r is initialized to zero in block 518. Row r equates to index i and column c equates to index j in DCT equations (1) and (10) for an image represented spatially as s(j,i). In block 520, a DCT according to equation (1) is taken of the first three-point segment of column c, namely s(0), s(1) and s(2). The modified IDCT of equation (10) is used in block 522 to reconstruct spatial image data points $\hat{s}$(0) and $\hat{s}$(1). The reconstructed image data point $\hat{s}$(2), which is overlapped with a second three-point segment, will be calculated and included in the second segment of reconstructed image data points. The values of $\hat{s}$(0) and $\hat{s}$(1) are stored or otherwise saved as reconstructed image data points of the vertically skewed image. In block 524 the row index r is incremented to r = r+N-1. In block 526, it is determined whether or not all of the pixels have been processed for column c. If all of the pixels have been processed, then the decision block 526 is answered in the affirmative and the overall horizontal shearing process continues in block 508. If on the other hand, all of the pixels in column c have not been processed, then the DCT transformation of the next N-point segment continues in block 520. In the current example, the value of r in block 526 is 2 after processing the first three-point segment, and the next three-point DCT occurs on pixels in the same column spatially located at s(2), s(3) and s(4). The modified IDCT of equation (10) is used to reconstruct spatial image data points $\hat{s}$(2) and $\hat{s}$(3) in block 522. The values of $\hat{s}$(2) and $\hat{s}$(3) are saved for the matrix of reconstructed image data points. The above overlapping procedure continues for each pixel of the image resulting in a first vertically skewed image represented as a matrix of reconstructed image data points.

Once the first vertically skewed image is obtained by vertically skewing the first horizontally skewed image, then the final step for rotating the image by an angle θ, according to decomposition of the rotation matrix as shown in equation (8), can be implemented by horizontally skewing the first vertically skewed matrix in an effort to obtain a second horizontally skewed matrix. This is done in the same manner as described above in accordance with the process shown in Figures 4A, 4B and 4C for obtaining the first horizontally skewed matrix. For the preferred embodiment using the three-point DCT with a one-point overlap, the processing steps of Figure 5C are followed. The second horizontally sheared image (represented by the second horizontally skewed matrix), which is obtained by horizontally skewing the first vertically skewed image, corresponds to the original image rotated by the selected angle θ.

The same procedures described above can be applied when rotating the image by decomposition of the rotation matrix of equation (9). However, the value of the horizontal shearing factor of block 442 in Figure 4A will be changed to α = -sinθ, and the value of the vertical shearing factor of block 502 in Figure 5A will be changed to β = tan(θ/2).

It is to be understood that the above described embodiments are merely illustrative of the present invention and represent a limited number of the possible specific embodiments that can provide applications of the principles of the invention. Numerous and varied other arrangements, which are structurally or operationally equivalent to the claims as described herein, may be readily devised in accordance with these principles by those skilled in the art without departing from the scope of the invention as claimed.

## Claims

1. An image processing device for skewing a segment of an image represented by pixels aligned in rows and columns in a spatial domain and including means (22) for selecting an image rotation angle, means (18) for initializing one of a column index and a row index, means (18) for determining a shear factor trigonometrically related to said image rotation angle, and means (18) for determining an offset related to said shear factor and said one of the column index and the row index; said image processing device characterized by: means (18) for generating DCT coefficients of the segment of pixels related to said one of the column index and the row index by taking a forward discrete even cosine transformation (DCT) of said segment; and means (18) for generating modified IDCT coefficients of said segment by taking a modified inverse discrete even cosine transformation (IDCT) of said DCT coefficients using a modified IDCT basis function dependent upon said offset, said modified IDCT coefficients corresponding to said skewed segment of the image.

2. The image processing device of claim 1, further characterized by means (18) for generating said skewed segment of the image in response to said modified IDCT coefficients.

3. An image processing device which provides an output image rotated relative to an input image by an angle $\theta$, said device including

    (a) means (18) for providing an array of rows and columns of pixels representing the input image,
    (b) means (18) for producing a first sheared image by performing a first shearing operation on said array, said means for producing a first sheared image having

        (b1) means (18) for initializing a first row or column index,
        (b2) means (18) for determining a first shear factor,
        (b3) means (18) for determining a first offset defined as the product of the first shear factor times the first row or column index,
        (b4) first means (18) for shifting pixels,
        (b5) means (18) for incrementing said first row or column index by one so that a next row or column of said image can be processed,

    (c) means (18) for producing a second sheared image by performing a second shearing operation on said first sheared image, said means for producing a second sheared image including

        (c1) means (18) for initializing a second row or column index,
        (c2) means (18) for determining a second shear factor,
        (c3) means (18) for determining a second offset defined as the product of the second shear factor times the second row or column index,
        (c4) second means (18) for shifting pixels,
        (c5) means (18) for incrementing said second row or column index by one so that a next row or column of said image can be processed, and

    (d) means (18) for producing a third sheared image corresponding to said output image by repeating said first shearing operation on said second sheared image, said image processing device characterized by said first and second shifting means (18) generating DCT coefficients, of a segment of pixels related to said first or second row or column index, by taking a forward discrete even cosine transformation (DCT) of said segment, and generating modified IDCT coefficients, corresponding to said shifted pixels, by performing a modified inverse discrete even cosine transformation (IDCT) of said DCT coefficients of said first or second row or column index using a modified IDCT basis function dependent upon said first or second offset.

4. An image processing method for skewing a segment of an image, said image represented by pixels aligned in rows and columns in a spatial domain, said method including the steps of selecting (440) an image rotation angle, initializing (440) one of a column index and a row index, determining (442) a shear factor trigonometrically related to said image rotation angle, and determining (444) an offset related to said shear factor and said one of the column index and the row index, said image processing method characterized by the steps of generating (454) DCT coefficients of the segment of pixels related to said one of the column index and the row index by taking a forward discrete even cosine transformation (DCT) of said segment, and generating (456) modified IDCT coefficients of said segment by taking a modified inverse discrete even cosine transformation (IDCT) of said DCT coefficients using a modified IDCT basis function dependent upon said offset, said modified IDCT coefficients corresponding to said skewed segment of the image.

5. The image processing method of claim 4, further characterized by the step of generating said skewed segment of the image in response to said modified IDCT coefficients.

6. An image processing method which provides an output image rotated relative to an input image by an angle $\theta$, said method including the steps of:

(a) providing an array of rows and columns of pixels representing the input image;
(b) producing a first sheared image by performing a first shearing operation on said array, said first shearing operation comprising the substeps of

(b1) initializing (440) a first row or column index,
(b2) determining (442) a first shear factor;
(b3) determining (444) a first offset defined as the product of the first shear factor times the first row or column index;
(b4) shifting (454, 456) pixels,
(b5) incrementing (448) said first row or column index by one, then repeating steps (b2) through (b4) for every pixel of the image;

(c) producing a second sheared image by performing a second shearing operation on said first sheared image, said second shearing operation comprising the substeps of

(c1) initializing (500) a second row or column index,
(c2) determining (502) a second shear factor;
(c3) determining (504) a second offset defined as the product of the second shear factor times the second row or column index,
(c4) shifting (454, 456) pixels,
(c5) incrementing (508) said second row or column index by one, then repeating steps (c2) through (c4) for every pixel of the image; and

(d) producing a third sheared image corresponding to said output image by performing said first shearing operation on said second sheared image, said image processing method characterized by said shifting steps: generating (454) DCT coefficients, of a segment of pixels related to said first row or column index, by taking a forward discrete even cosine transformation (DCT) of said segment; and generating (456) modified IDCT coefficients, corresponding to shifted pixels, by performing a modified inverse discrete even cosine transformation (IDCT) of said DCT coefficients of said first row or column index using a modified IDCT basis function dependent upon said first offset.

**Patentansprüche**

1. Bildverarbeitungsvorrichtung zum Verzerren eines Segments eines Bildes, das durch Bildelemente dargestellt ist, die in Zeilen und Spalten im räumlichen Bereich ausgerichtet sind, mit: einem Mittel (22) zum Auswählen eines Bilddrehungswinkels; einem Mittel (18) zum Initialisieren eines Spaltenindex oder eines Zeilenindex; einem Mittel (18) zum Bestimmen eines mit dem Bilddrehungswinkel trigonometrisch in Beziehung stehenden Scherungsfaktors; einem Mittel (18) zum Bestimmen eines Versatzes, der mit dem Scherungsfaktor und dem Spaltenindex oder dem Zeilenindex in Beziehung steht; wobei die Bildverarbeitungsvorrichtung gekennzeichnet ist durch: ein Mittel (18) zum Erzeugen von DCT-Koeffizienten des Segments aus Bildelementen, die mit dem Spaltenindex oder dem Zeilenindex in Beziehung stehen, indem man eine diskrete gerade Vorwärts-Cosinustransformation (DCT) des Segments nimmt; und einem Mittel (18) zum Erzeugen modifizierter IDCT-Koeffizienten des Segments, indem man eine modifizierte diskrete gerade Umkehr-Cosinustransformation (IDCT) der DCT-Koeffizienten unter Verwendung einer modifizierten IDCT-Basisfunktion nimmt, die von dem Versatz abhängig ist, wobei die modifizierten IDCT-Koeffizienten dem verzerrten Segment des Bildes entsprechen.

2. Bildverarbeitungsvorrichtung nach Anspruch 1, weiter gekennzeichnet durch ein Mittel (18) zum Erzeugen des verzerrten Segments des Bildes als Reaktion auf die modifizierten IDCT-Koeffizienten.

3. Bildverarbeitungsvorrichtung, die ein Ausgabebild bereitstellt, das bezüglich eines Eingabebildes um einen Winkel $\theta$ gedreht ist, und die aufweist:

(a) ein Mittel (18) zum Bereitstellen einer Anordnung aus Zeilen und Spalten aus Bildelementen, die das Eingabebild darstellen,

(b) ein Mittel (18) zum Erzeugen eines ersten gescherten Bildes mittels Durchführung eines ersten Scherungsvorgangs an der Anordnung, wobei das Mittel zum Erzeugen eines ersten gescherten Bildes besitzt:

(b1) ein Mittel (18) zum Initialisieren eines ersten Zeilen- oder Spaltenindex,

(b2) ein Mittel (18) zum Bestimmen eines ersten Scherungsfaktors,

(b3) ein Mittel (18) zum Bestimmen eines ersten Versatzes, der als das Produkt des ersten Scherungsfaktors mit dem ersten Zeilen- oder Spaltenindex definiert ist,

(b4) ein erstes Mittel (18) zum Verschieben von Bildelementen,

(b5) ein Mittel (18) zum Inkrementieren des ersten Zeilen-oder Spaltenindex um eins, so daß eine nächste Zeile oder Spalte des Bildes verarbeitet werden kann,

(c) ein Mittel (18) zum Erzeugen eines zweiten gescherten Bildes mittels Durchführung eines zweiten Scherungsvorgangs an dem ersten gescherten Bild, wobei das Mittel zum Erzeugen eines zweiten gescherten Bildes besitzt:

(c1) ein Mittel (18) zum Initialisieren eines zweiten Zeilen- oder Spaltenindex,

(c2) ein Mittel (18) zum Bestimmen eines zweiten Scherungsfaktors,

(c3) ein Mittel (18) zum Bestimmen eines zweiten Versatzes, der als das Produkt des zweiten Scherungsfaktors mit dem zweiten Zeilen- oder Spaltenindex definiert ist,

(c4) ein zweites Mittel (18) zum Verschieben von Bildelementen,

(c5) ein Mittel (18) zum Inkrementieren des zweiten Zeilen-oder Spaltenindex um eins, so daß eine nächste Zeile oder Spalte des Bildes verarbeitet werden kann, und

(d) ein Mittel (18) zum Erzeugen eines dritten gescherten Bildes, das dem Ausgabebild entspricht, durch Wiederholen des ersten Scherungsvorgangs an dem zweiten gescherten Bild,

wobei die Bildverarbeitungsvorrichtung dadurch gekennzeichnet ist, daß das erste und das zweite Verschiebungsmittel (18) DCT-Koeffizienten eines Segments aus Bildelementen erzeugen, die zu dem ersten Zeilen- oder Spaltenindex in Beziehung stehen, indem sie eine diskrete gerade Vorwärts-Cosinustransformation (DCT) des Segments nehmen, sowie modifizierte IDCT-Koeffizienten erzeugen, die den verschobenen Bildelementen entsprechen, indem sie eine modifizierte diskrete gerade Umkehr-Cosinustransformation (IDCT) der DCT-Koeffizienten des ersten oder zweiten Zeilen- oder Spaltenindex unter Verwendung einer modifizierten IDCT-Basisfunktion durchführen, die von dem ersten oder dem zweiten Versatz abhängig ist.

4. Bildverarbeitungsverfahren zum Verzerren eines Segments eines Bildes, das durch Bildelemente dargestellt ist, die in Zeilen und Spalten im räumlichen Bereich ausgerichtet sind, wobei das Verfahren die folgenden Schritte aufweist: Auswählen (440) eines Bilddrehungswinkels; Initialisieren (440) eines Spaltenindex oder eines Zeilenindex; Bestimmen (442) eines mit dem Bilddrehungswinkel trigonometrisch in Beziehung stehenden Scherungsfaktors; Bestimmen (444) eines Versatzes, der mit dem Scherungsfaktor und dem Spaltenindex oder dem Zeilenindex in Beziehung steht; wobei das Bildverarbeitungsverfahren durch die folgenden Schritte gekennzeichnet ist: Erzeugen (454) von DCT-Koeffizienten des Segments aus Bildelementen, die mit dem Spaltenindex oder dem Zeilenindex in Beziehung stehen, indem man eine diskrete gerade Vorwärts-Cosinustransformation (DCT) des Segments nimmt; und Erzeugen (456) modifizierter IDCT-Koeffizienten des Segments, indem man eine modifizierte diskrete gerade Umkehr-Cosinustransformation (IDCT) der DCT-Koeffizienten unter Verwendung einer modifizierten IDCT-Basisfunktion nimmt, die von dem Versatz abhängig ist, wobei die modifizierten IDCT-Koeffizienten dem verzerrten Segment des Bildes entsprechen.

5. Bildverarbeitungsverfahren nach Anspruch 4, weiter gekennzeichnet durch einen Schritt zum Erzeugen des gescherten Segments des Bildes als Reaktion auf die modifizierten IDCT-Koeffizienten.

6. Bildverarbeitungsverfahren, das ein Ausgabebild bereitstellt, das bezüglich eines Eingabebildes um einen Winkel $\theta$ gedreht ist, und die folgenden Schritte aufweist:

(a) Bereitstellen einer Anordnung aus Zeilen und Spalten aus Bildelementen, die das Eingabebild darstellen,

(b) Erzeugen eines ersten gescherten Bildes mittels Durchführung eines ersten Scherungsvorgangs an der Anordnung, wobei der erste Scherungsvorgang die folgenden Unterschritte aufweist:

(b1) Initialisieren (440) eines ersten Zeilen- oder Spaltenindex,

(b2) Bestimmen (442) eines ersten Scherungsfaktors,

(b3) Bestimmen (444) eines ersten Versatzes, der als das Produkt des ersten Scherungsfaktors mit dem ersten Zeilen- oder Spaltenindex definiert ist,

(b4) Verschieben (454, 456) von Bildelementen,

(b5) Inkrementieren (448) des ersten Zeilen-oder Spaltenindex um eins, und dann Wiederholen der Schritte (b2) bis (b4) für jedes Bildelement des Bildes,

(c) Erzeugen eines zweiten gescherten Bildes mittels Durchführung eines zweiten Scherungsvorgangs an dem ersten gescherten Bild, wobei der zweite Scherungsvorgang die folgenden Unterschritte aufweist:

(c1) Initialisieren (500) eines zweiten Zeilen- oder Spaltenindex,

(c2) Bestimmen (502) eines zweiten Scherungsfaktors,

(c3) Bestimmen (504) eines zweiten Versatzes, der als das Produkt des zweiten Scherungsfaktors mit dem zweiten Zeilen- oder Spaltenindex definiert ist,

(c4) Verschieben (454, 456) von Bildelementen,

(c5) Inkrementieren (508) des zweiten Zeilen-oder Spaltenindex um eins, und dann Wiederholen der Schritte (c2) bis (c4) für jedes Bildelement des Bildes, und

(d) Erzeugen eines dritten gescherten Bildes, das dem Ausgabebild entspricht, mittels Durchführung des ersten Scherungsvorgangs an dem zweiten gescherten Bild,

wobei das Bildverarbeitungsverfahren durch die folgenden Verschiebungsschritte gekennzeichnet ist: Erzeugen (454) von DCT-Koeffizienten eines Segments aus Bildelementen, die zu dem ersten Zeilen- oder Spaltenindex in Beziehung stehen, indem eine diskrete gerade Vorwärts-Cosinustransformation (DCT) des Segments genommen wird; sowie Erzeugen modifizierter IDCT-Koeffizienten, die verschobenen Bildelementen entsprechen, indem eine modifizierte diskrete gerade Umkehr-Cosinustransformation (IDCT) der DCT-Koeffizienten des ersten oder zweiten Zeilen- oder Spaltenindex unter Verwendung einer modifizierten IDCT-Basisfunktion durchgeführt wird, die von dem ersten Versatz abhängig ist.

**Revendications**

1. Dispositif de traitement d'image servant à incliner un segment d'une image représentée par des pixels alignés en colonnes et rangées dans le domaine spatial, et comprenant un moyen (22) servant à choisir un angle de rotation de l'image, un moyen (18) servant à initialiser l'un des indices de colonne ou de rangée, un moyen (18) servant à déterminer un facteur d'inclinaison relié trigonométriquement audit angle de rotation de l'image, et un moyen (18) servant à déterminer un décalage relié audit facteur d'inclinaison et audit indice de colonne ou de rangée, ledit dispositif de traitement d'image étant caractérisé par un moyen (18) servant à produire des coefficients TCD du segment de pixels relié audit indice de colonne ou de rangée en effectuant une transformation cosinus discrète paire et directe (TCD) dudit segment, et un moyen (18) servant à produire des coefficients TCDI modifiés dudit segment en effectuant une transformation cosinus discrète, paire et inverse modifiée (TCDI) desdits coefficients TCD à l'aide d'une fonction de base TCDI modifiée qui dépend dudit décalage, lesdits coefficients TCDI modifiés correspondant audit segment incliné de l'image.

2. Dispositif de traitement d'image selon la revendication 1, caractérisé en outre par un moyen (18) servant à produire ledit segment incliné de l'image en réponse auxdits coefficients TCDI modifiés.

3. Dispositif de traitement d'image qui fournit une image de sortie ayant tourné d'un angle $\theta$ par rapport à l'image d'entrée, ledit dispositif comprenant :

a) un moyen (18) servant à fournir une matrice de rangées et de colonnes de pixels qui représente l'image d'entrée,

b) un moyen (18) servant à produire une première image inclinée en effectuant une première opération de transvection sur ladite matrice, ledit moyen de production d'une première image inclinée comprenant :

(b$_1$) un moyen (18) servant à initialiser un premier indice de colonne ou de rangée,

(b$_2$) un moyen (18) servant à déterminer un premier facteur d'inclinaison,

(b₃) un moyen (18) servant à déterminer un premier décalage défini comme le produit du premier facteur d'inclinaison par le premier indice de colonne ou de rangée,
(b₄) un premier moyen (18) servant à décaler les pixels,
(b₅) un moyen (18) servant à incrémenter de un ledit premier indice de colonne ou de rangée pour pouvoir traiter la colonne ou la rangée suivante de ladite image,

c) un moyen (18) servant à produire une deuxième image inclinée en effectuant une deuxième opération de transvection sur ladite première image inclinée, ledit moyen de production d'une deuxième image inclinée comprenant :

(c₁) un moyen (18) servant à initialiser un deuxième indice de colonne ou de rangée,
(c₂) un moyen (18) servant à déterminer un deuxième facteur d'inclinaison,
(c₃) un moyen (18) servant à déterminer un deuxième décalage défini comme le produit du deuxième facteur d'inclinaison par le deuxième indice de colonne ou de rangée,
(c₄) un deuxième moyen (18) servant à décaler les pixels,
(c₅) un moyen (18) servant à incrémenter de un ledit deuxième indice de colonne ou de rangée pour pouvoir traiter la colonne ou la rangée suivante de ladite image, et

d) un moyen (18) servant à produire une troisième image inclinée qui correspond à ladite image de sortie, en répétant ladite première opération de transvection sur ladite deuxième image inclinée, ledit dispositif de traitement d'image étant caractérisé par le fait que lesdits premier et deuxième moyens de décalage (18) produisent des coefficients TCD d'un segment de pixels relié audit premier ou deuxième indice de colonne ou de rangée, en effectuant une transformation cosinus discrète, paire et directe (TCD) dudit segment, et produisent des coefficients TCDI modifiés, correspondant auxdits pixels décalés, en effectuant une transformation cosinus discrète, paire et inverse modifiée (TCDI) desdits coefficients TCD dudit premier ou deuxième indice de colonne ou de rangée à l'aide d'une fonction de base de TCDI modifiée qui dépend dudit premier ou deuxième décalage.

4. Procédé de traitement d'image servant à incliner un segment d'une image, ladite image étant représentée par des pixels alignés en des rangées et des colonnes dans le domaine spatial, ledit procédé comprenant les étapes consistant à choisir (440) un angle de rotation de l'image, à initialiser (440) un indice de colonne ou de rangée, à déterminer (442) un facteur d'inclinaison relié trigonométriquement audit angle de rotation de l'image, et à déterminer (444) un décalage relié audit facteur d'inclinaison et audit indice de colonne ou de rangée, ledit procédé de traitement d'image étant caractérisé par les étapes consistant à produire (454) des coefficients TCD du segment de pixels relié audit indice de colonne ou de rangée en effectuant une transformation cosinus discrète paire et directe (TCD) dudit segment, et à produire (456) des coefficients TCDI modifiés dudit segment en effectuant une transformation cosinus discrète, paire et inverse modifiée (TCDI) desdits coefficients TCD à l'aide d'une fonction de base TCDI modifiée qui dépend dudit décalage, lesdits coefficients TCDI modifiés correspondant au segment incliné de l'image.

5. Procédé de traitement d'image selon la revendication 4, caractérisé en outre par l'étape consistant à produire ledit segment incliné de l'image en réponse auxdits coefficients TCDI modifiés.

6. Procédé de traitement d'image qui fournit une image de sortie ayant tourné d'un angle θ par rapport à l'image d'entrée, ledit procédé comprenant les étapes consistant à :

a) fournir une matrice de rangées et de colonnes de pixels qui représente l'image d'entrée,
b) produire une première image inclinée en effectuant une première opération de transvection sur ladite matrice, ladite première opération de transvection comprenant les sous-étapes consistant à :

(b₁) initialiser (440) un premier indice de colonne ou de rangée,
(b₂) déterminer (442) un premier facteur d'inclinaison,
(b₃) déterminer (444) un premier décalage défini comme le produit du premier facteur d'inclinaison par le premier indice de colonne ou de rangée,
(b₄) décaler (454, 456) les pixels,
(b₅) incrémenter de un (448) ledit premier indice de colonne ou de rangée et répéter ensuite les étapes (b₂) à (b₄) pour chaque pixel de l'image,

c) produire une deuxième image inclinée en effectuant une deuxième opération de transvection sur ladite première image inclinée, ladite deuxième opération de transvection comprenant les sous-étapes consistant à :

$(c_1)$ initialiser (500) un deuxième indice de colonne ou de rangée,
$(c_2)$ déterminer (502) un deuxième facteur d'inclinaison,
$(c_3)$ déterminer (504) un deuxième décalage défini comme le produit du deuxième facteur d'inclinaison par le deuxième indice de colonne ou de rangée,
$(c_4)$ décaler (454, 456) les pixels,
$(c_5)$ incrémenter de un (508) ledit deuxième indice de colonne ou de rangée et répéter ensuite les étapes $(c_2)$ à $(c_4)$ pour chaque pixel de l'image, et

d) produire une troisième image inclinée qui correspond à ladite image de sortie, en répétant ladite première opération de transvection sur ladite deuxième image inclinée,

ledit procédé de traitement d'image étant caractérisé par le fait que lesdites étapes de transvection produisent (454) des coefficients TCD d'un segment de pixels relié audit premier ou deuxième indice de colonne ou de rangée, en effectuant une transformation cosinus discrète, paire et directe (TCD) dudit segment, et produisent (456) des coefficients TCDI modifiés, correspondant auxdits pixels décalés, en effectuant une transformation cosinus discrète, paire et inverse modifiée (TCDI) desdits coefficients TCD dudit premier ou deuxième indice de colonne ou de rangée à l'aide d'une fonction de base de TCDI modifiée qui dépend dudit premier ou deuxième décalage.

FIG. 1

FIG. 2A
(PRIOR ART)

FIG. 2B
(PRIOR ART)

FIG. 3A

IMAGE SIGNAL SOURCE 350

IMAGE ACQ. DEVICE 355

ROM 352
ROM 354
ROM 357

RAM 356

MATRIX MULTIPLIER 358

$C_{1Y}$  $C_{2Y}$  $C_{3Y}$

RESET CK1 CK2 $O_2$ $O_1$ $I_2$ $I_1$

CONTROL SEQUENCER LOGIC 360

CLOCK 362

RAM 364

IMAGE GEN. 365

366 368 370 371 372 374 376 378 379 380 382 383 361

20

FIG. 3B

$C_{11}$ $C_{12}$ $C_{13}$ $C_{11}$ $C_{12}$ $C_{13}$ $C_{11}$ ••• $C_{1Y}$

$C_{21}$ $C_{22}$ $C_{23}$ $C_{21}$ $C_{22}$ $C_{23}$ $C_{21}$ ••• $C_{2Y}$

$C_{31}$ $C_{32}$ $C_{33}$ $C_{31}$ $C_{32}$ $C_{33}$ $C_{31}$ ••• $C_{3Y}$

••• RESET

$D_{11}$ $D_{21}$ $D_{31}$ $D_{12}$ $D_{22}$ $D_{32}$ $D_{13}$ ••• $D_{XY}$

•• CK1

$T_1$ $T_2$ $T_3$ $T_4$ $T_5$ $T_6$

••• CK2

$T_7$

••• $O_0$

$T_8$ $T_{10}$

••• $O_1$

$T_9$ $T_{11}$

$B_{11}$ $B_{12}$ ••• LATCH **426** OUTPUT

$B_{21}$ $B_{22}$ ••• LATCH **428** OUTPUT

$B_{31}$ $B_{32}$ ••• LATCH **430** OUTPUT

MULTIPLEXED OUTPUT

$B_{11}$ $B_{21}$ $B_{31}$ $B_{11}$ $B_{22}$ $B_{32}$

FIG. 3C

SELECT $\theta$
r = 0
P rows
Q columns
— 440

$\alpha = -TAN \dfrac{\theta}{2}$
— 442

$\triangle H = \alpha r$
— 444

SHIFT ROW r
BY $\triangle H$
— 446

r = r+1
— 448

450
r = P

N

Y

END
— 452

FIG. 4A

FROM BLOCK 444

446

TAKE DCT
OF ROW r     454

TAKE MIDCT
OF ROW r     456

TO BLOCK 448

FIG. 4B

FROM BLOCK <u>444</u>

<u>446</u>

C = 0
N = 3
— 458

TAKE DCT OF
N PT. SEGMENT
— 460

TAKE MIDCT OF
N PT. SEGMENT
— 462

C = C + N - 1
— 464

— 466

C = Q

N

Y

TO BLOCK <u>448</u>

FIG. 4C

FIG.5A

FROM BLOCK <u>504</u>

<u>506</u>

```
TAKE DCT
OF COL c
```
⌇ 514

```
TAKE MIDCT
OF COL c
```
⌇ 516

TO BLOCK <u>508</u>

FIG. 5B

FROM BLOCK 504

<u>506</u>

r = 0
N = 3

⌐ 518

TAKE DCT OF
N PT. SEGMENT

⌐ 520

TAKE MIDCT OF
N PT. SEGMENT

⌐ 522

r = r + N - 1

⌐ 524

526

r = P

N

Y

TO BLOCK 508

FIG. 5C

28